Europäisches Patentamt

European Patent Office

Office européen des brevets

(19)

(11) Veröffentlichungsnummer: **0 362 128**
**A1**

(12) **EUROPÄISCHE PATENTANMELDUNG**

(21) Anmeldenummer: **89810641.4**

(22) Anmeldetag: **30.08.89**

(51) Int. Cl.⁵: **G02B 6/38**

(30) Priorität: **19.09.88 CH 3485/88**

(43) Veröffentlichungstag der Anmeldung:
**04.04.90 Patentblatt 90/14**

(84) Benannte Vertragsstaaten:
**AT BE CH DE FR GB IT LI LU NL SE**

(71) Anmelder: **Diamond SA**
**Via dei Patrizi 5**
**CH-6616 Losone(CH)**

(72) Erfinder: **De Marchi, Silverio**
**Via Contra**
**CH-6646 Contra(CH)**

(74) Vertreter: **Wenger, René et al**
**Hepp, Wenger & Partner AG Marktgasse 18**
**CH-9500 Wil(CH)**

(54) **Stecker zum koaxialen Verbinden zweier Lichtleitfasern.**

(57) Die beiden Faserendhülsen (2, 2') sind in einer Zentrierhülse (3) positioniert, welche in Längsrichtung mit einem Schlitz (4) versehen ist. Um eine Durchbiegung der Zentrierhülse beim Einschieben der Faserendhülsen zu verhindern bzw. zu begrenzen, ist die geschlitzte Zentrierhülse (3) von einer Stabilisierungshülse (11) umgeben. Dadurch werden Biegebrüche der relativ harten Zentrierhülse (3) vermieden.

EP 0 362 128 A1

Fig. 1

### Stecker zum koaxialen Verbinden zweier Lichtleitfasern

Die Erfindung bezieht sich auf einen Stecker zum koaxialen Verbinden zweier Lichtleitfasern gemäss dem Oberbegriff von Anspruch 1. Die schwimmend gelagerte und radial federnde geschlitzte Zentrierhülse hat die Aufgabe, die beiden Faserendhülsen möglichst spielfrei aufzunehmen und festzuhalten. Eine derartige Anordnung ist beispielsweise durch die DE-U-87 16 076 der Anmelderin bekannt geworden.

Es hat sich nun gezeigt, dass beim Einschieben der Faserendhülsen in die Zentrierhülse relativ hohe Biegespannungen auftreten können. Selbst bei einer Erleichterung des Einschiebevorgangs durch konische Oeffnungen an den einzelnen Bauteilen ist es praktisch ausgeschlossen, dass die Faserendhülsen manuell absolut koaxial in die Zentrierhülse eingeschoben werden können. Die Zentrierhülse wird daher gebogen, was insbesondere bei Zentrierhülsen aus keramischem Material zu einem Materialbruch führen kann.

Es ist daher eine Aufgabe der Erfindung, unter Ausnützung der Vorteile einer schwimmend gelagerten und radial federnden Zentrierhülse einen Bruch derselben durch Biegebeanspruchung zu verhindern. Diese Aufgabe wird erfindungsgemäss durch einen Stecker gelöst, der die Merkmale von Anspruch 1 aufweist.

Die Stabilisierungshülse begrenzt ersichtlicherweise die maximal mögliche Durchbiegung der Zentrierhülse, ohne dass die schwimmende Lagerung dabei völlig eliminiert werden muss. Auch die radiale Federung de Zentrierhülse beim Einschieben der Faserendhülsen ist voll gewährleistet. Die maximal zulässige Durchbiegung der Zentrierhülse je nach Werkstoff und Abmessungen kann rechnerisch ermittelt werden, so dass unter Ausnützung des maximal möglichen Spiels ein Biegebruch ausgeschlossen werden kann.

Vorzugsweise ist auch die Stabilisierungshülse selbst mit radialem und axialem Spiel im Steckergehäuse gelagert, so dass möglichst keine zusätzlichen Kräfte auf sie selbst bzw. auf die Zentrierhülse einwirken. Die Stabilisierungshülse kann aus einem Buntmetall, beispielsweise aus Messing, oder aus einer Buntmetallegierung gefertigt sein. Auch eine Herstellung aus Stahl oder aus einem anderen Werkstoff wäre denkbar. Wichtig ist, dass die Stabilisierungshülse genügend Biegesteifigkeit aufweist, um die Kräfte einer sich durchbiegenden Zentrierhülse aufzunehmen, ohne dass die Stabilisierungshülse selbst bricht.

Die Lagerung der Zentrierhülse und der Stabilisierungshülse im Steckergehäuse erfolgt vorzugsweise so, dass beide Bauteile durch ein gemeinsames Sicherungselement festgehalten werden, das in eine Nut im Steckergehäuse einrastbar ist. Diese Anordnung erleichtert nicht nur die Montage, sondern erlaubt auch ein schnelles und problemloses Auswechseln der Bauteile.

Ein Ausführungsbeispiel der Erfindung ist in den Zeichnungen dargestellt und wird nachstehend genauer beschrieben. Es zeigen:

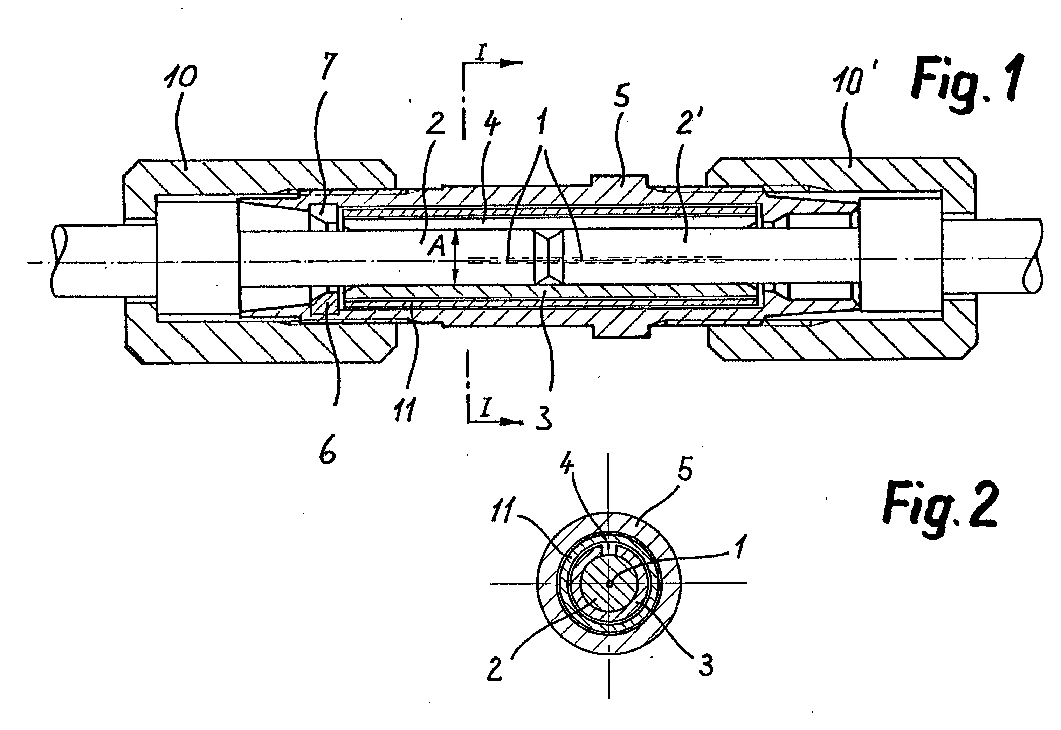

Figur 1 einen Querschnitt durch einen Stecker mit eingeschobenen Faserendhülsen, und

Figur 2 einen Querschnitt durch die Ebene I-I am Stecker gemäss Figur 1.

Wie in den Figuren dargestellt, ist das Steckergehäuse 5 als Mittelstück zur Aufnahme von zwei Faserendhülsen 2, 2′ ausge bildet. In der Praxis kann dieses Steckergehäuse ganz unterschiedliche Konfigurationen aufweisen, je nachdem, ob der Stecker z.B. an einer Gehäusewand montiert oder als freie Steckverbindung ausgebildet ist. Auch bestimmte Steckeraussenteile wie z.B. Schutzhülsen aus Kunststoff und dergleichen könnten noch vorhanden sein.

In den Faserendhülsen 2 und 2′ ist die Lichtleitfaser 1 hochpräzise vormontiert und zentriert. Zur präzisen axialen Ausrichtung der beiden Faserendhülsen dient die Zentrierhülse 3, welche über ihre ganze Länge einen Schlitz 4 aufweist. Der Schlitz 4 verläuft vorzugsweise paralle zur Mittelachse, könnte aber auch in einem bestimmten Winkel zur Mittelachse verlaufen. Die Zentrierhülse 3 ist vorzugsweise aus einem schlag- und abriebfesten Material wie z.B. aus Hartmetall oder aus Keramik gefertigt. Die Faserendhülsen werden im Steckergehäuse 5 mittels Ueberwurfmuttern 10 und 10′ festgehalten bzw. gegeneinander gepresst.

Die Zentrierhülse 3 ist über ihre gesamte Länge von einer Stabilisierungshülse 11 umgeben, wobei die Zentrierhülse 3 mit radialem Spiel in der Stabilisierungshülse 11 liegt. Die Zentrierhülse 3 kann sich damit nur begrenzt durchbiegen.

Die Stabilisierungshülse 11 ihrerseits ist mit radialem Spiel im Steckergehäuse 5 gelagert. Die ganze Anordnung bestehend aus Zentrierhülse 3 und Stabilisierungshülse 11 wird im Steckergehäuse 5 durch ein Sicherungselement 6, beispielsweise in der Form eines Sprengrings, gehalten. Der Sprengring ist in eine umlaufende Nut 7 im Steckergehäuse 5 eingerastet, wobei Zentrierhülse und Stabilisierungshülse auch ein begrenztes Spiel in Axialrichtung haben. Alternativ zur dargestellten Ausführungsform wäre es auch denkbar, auf beiden Seiten der Hülsen ein Sicherungselement 6 anzuordnen.

Beim Einschieben der Faserendhülsen 2, 2′ mit dem Aussendurchmesser A biegt sich die Zentrierhülse 3 geringfügig auf, so dass sie die Faserendhülsen spielfrei umschliesst. Das Spiel zwischen dem Aussenmantel der Zentrierhülse 3 und dem Innenmantel der Stabilisierungshülse 11 muss ersichtlicherweise so dimensioniert sein, dass die radiale Aufbiegebewegung der Zentrierhülse in keinem Fall behindert wird.

## Ansprüche

1. Stecker zum koaxialen Verbinden zweier Lichtleitfasern (1), deren Enden in zylindrischen Faserendhülsen (2) fest positioniert sind, wobei die beiden Faserendhülsen (2) in eine gemeinsame Zentrierhülse (3) einschiebbar sind, welche einem im wesentlichen in Längsrichtung verlaufenden Schlitz (4) aufweist und welche mit radialem Spiel gelagert ist, dadurch gekennzeichnet, dass die geschlitzte Zentrierhülse (3) zur Begrenzung ihrer Deformation von einer Stabilisierungshülse (11) umgeben ist, welche ihrerseits mit radialem Spiel in einem Steckergehäuse (5) gelagert ist.

2. Stecker nach Anspruch 1, dadurch gekennzeichnet, dass die Stabilisierungshülse (11) mit radialem und axialem Spiel im Steckergehäuse gelagert ist.

3. Stecker nach Anspruch 1 oder 2, dadurch gekennzeichnet, dass die Stabilisierungshülse (11) aus einem Buntmetall oder aus einer Buntmetallegierung gefertigt ist.

4. Stecker nach Anspruch 1 oder 2, dadurch gekennzeichnet, dass die Stabilisierungshülse (11) Stahl gefertigt ist.

5. Stecker nach einem der Ansprüche 1 bis 4, dadurch gekennzeichnet, dass die Zentrierhülse (3) und die Stabilisierungshülse (11) beide durch wenigstens ein, in eine Nut (7) im Steckergehäuse (5) einrastbares Sicherungselement (6) festgehalten sind.

Fig. 1

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-0 223 608 (RAYCHEM CORP.)<br>* Figur 3; Seite 6, Zeilen 21-31; Seite 7, Zeile 14 *<br>--- | 1 | G 02 B 6/38 |
| Y | EP-A-0 182 577 (RAYCHEM CORP.)<br>* Figuren 6,7; Seite 12, Zeilen 26-31; Seite 13, Zeilen 1-26 *<br>--- | 1 | |
| A | EP-A-0 118 804 (ALLIED CORP.)<br>* Figur 1c; Seite 5, Zeilen 7-19 *<br>--- | 1 | |
| A | US-A-4 258 977 (H.H. LUKAS et al.)<br>* Figur 1; Spalte 3, Zeilen 4-50 *<br>--- | 1 | |
| A,D | DE-U-8 716 076 (S.A. DIAMOND)<br>* Figuren 1,4; Seite 4, Zeilen 7-17; Seite 5, Zeilen 16-18, in der Anmeldung erwähnt *<br>--- | 1,2,5 | |
| A | DE-A-3 641 145 (WADEWITZ)<br>* Figuren 3a,3b; Spalte 4, Zeile 68; Spalte 5, Zeilen 1-3; Spalte 6, Zeilen 14-41 *<br>----- | 1,3,4 | RECHERCHIERTE SACHGEBIETE (Int. Cl.5)<br><br>G 02 B 6/00 |

Der vorliegende Recherchenbericht wurde für alle Patentansprüche erstellt

| Recherchenort | Abschlußdatum der Recherche | Prüfer |
|---|---|---|
| DEN HAAG | 20-12-1989 | MATHYSSEK K. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
.............................................................
& : Mitglied der gleichen Patentfamilie, übereinstimmendes
    Dokument

EPO FORM 1503 03.82 (P0403)